# EUROPÄISCHE PATENTANMELDUNG

(11) **EP 0 876 759 A2**
(43) Veröffentlichungstag der Anmeldung: **11.11.1998**
(21) Anmeldenummer: 98103411.9
(22) Anmeldetag: 27.02.1998
(51) Int. Cl.: A01K 3/00

(54) **Vorrichtung zum Verschliessen der Eingänge in elektrischen Weidezäunen**

(30) Priorität: 06.05.1997 DE 29708033 U
(71) Anmelder: Vogl, Georg, 82383 Hohenpeissenberg (DE)
(72) Erfinder: Vogl, Georg, 82383 Hohenpeissenberg (DE)
(74) Vertreter: Brose, D. Karl

(57) **Zusammenfassung**

Die Erfindung betrifft eine Vorrichtung (1) zum Verschließen der Eingänge in elektrischen Weidezäunen mit einem mit dem Weidezaun über einen Leiter verbundenen isolierten Torgriff (2). Dieser ist mittels einer elektrisch leitenden Lasche oder Bügel (4) mit einem elektrisch leitenden Gegenstück (6) des Weidezaunsystems lösbar koppelbar. Das Gegenstück (6) ist als mit dem Weidezaun elektrisch verbundenes Schloß (8) ausgebildet, in welchem der Bügel (4) des Torgriffs (2) verriegelbar ist. Das Schloß (8) kann mittels eines, zumindest ein isoliertes Griffteil (12) aufweisenden Schlüssels (10) geöffnet werden.

## Beschreibung

Die Erfindung betrifft eine Vorrichtung zum Verschließen der Eingänge in elektrischen Weidezäunen mit einem mit dem Weidezaun über einen Leiter verbundenen isolierten Torgriff, welcher mit einer elektrisch leitenden Lasche oder Bügel mit einem elektrisch leitenden Gegenstück des Weidezauns lösbar koppelbar ist.

Bei bisher üblichen elektrischen Weidezaunsystemen besteht das Gegenstück normalerweise aus einem mit dem elektrischen Weidezaun leitend verbundenen Haken, in welchen der Bügel mittels des isolierten Torgriffs eingehängt wird. Hierbei stellt sich häufig das Problem, daß derartige Eingänge unbefugt, beispielsweise durch Wanderer geöffnet und nicht wieder geschlossen werden, sodaß häufig die durch elektrische Weidezäune gesicherten Tiere wie Pferde oder Kühe, die Weide verlassen können, was ein erhebliches Sicherheitsrisiko darstellt. Der Erfindung liegt daher die Aufgabe zugrunde, eine möglichst einfach aufgebaute Vorrichtung der eingangs genannten Art zu schaffen, die ein unbefugtes Öffnen der Eingänge in elektrischen Weidezäunen ausschließt.

Bei einer Vorrichtung der oben definierten Art wird diese Aufgabe im wesentlichen dadurch gelöst, daß das Gegenstück als mit dem Weidezaun elektrisch verbundenes Schloß ausgebildet ist, in welchem der Bügel des Torgriffs verriegelbar ist und welches mittels eines mindestens ein isoliertes Griffteil aufweisenden Schlüssels öffenbar ist. Hierdurch wird ein unbefugtes Öffnen des Eingangs vollständig vermieden, da sich das den Bügel aufnehmende Schloß nur mittels des Schlüssels öffnen läßt, welcher darüber hinaus noch isoliert sein muß, da die schließenden Teile des Schlosses ebenfalls unter Spannung stehen, sodaß eine Manipulation mit anderen Gegenständen, die nicht isoliert sind, ausgeschlossen werden kann.

Bevorzugt ist es hierbei, das Schloß als Schnappschloß auszubilden, da hierdurch eine einfache Bedienung möglich ist, indem der Bügel mittels des Torgriffs einfach in das Schloß eingeschoben werden kann.

Bei einer vorteilhaften Ausbildungsform nach der Erfindung ist das Schloß zwischen einer nicht leitenden Grundplatte und einer nicht leitenden Deckplatte angeordnet, wobei das Schloß mittels der Grundplatte an einem Pfahl des Weidezauns befestigbar ist. Hierdurch sind die unter elektrischer Spannung stehenden Teile des Schlosses sowohl gegen den Pfahl hin isoliert, sodaß keine Erdung auftritt, als auch gegen die von Personen zugänglichen Seite ebenfalls isoliert.

Bevorzugt ist es ferner, daß das Schloß einen in einem elektrisch leitenden Gehäuse gelagerten stromführenden Riegel aufweist, welcher unter Vorspannung einer Feder 24 in einen Aufnahmeschlitz für den Bügel des Handgriffs vorsteht. Hierdurch wird eine sichere Weiterleitung des Stroms gewährleistet, wenn der Eingang des Weidezauns geschlossen ist.

Im einzelnen ist es vorteilhaft, daß der Riegel eine zur Eingangsseite des Aufnahmeschlitzes weisende Schrägfläche aufweist, sodaß sich der Torgriff bzw. der Bügel des Torgriffs einfach in das Schloß einführen läßt.

Bei dieser Ausführungsform wird eine besonders einfache Konstruktion dadurch geschaffen, daß der Riegel eine Schlüsselöffnung in dem der Schrägfläche gegenüberliegenden Ende aufweist, mittels derer der Riegel mit dem isolierten Schlüssel aus dem Aufnahmeschlitz zurückziehbar ist.

Bei einer abgewandelten Ausführungsform nach der Erfindung, kann zwischen der Grundplatte und der Deckplatte ein aus Metall, insbesondere Edelstahl bestehender Schloßkasten 40, angeordnet sein, welcher einen mit dem isolierten Schlüssel auslenkbaren Schwenkriegel enthält, der in den in dem Schloßkasten ausgebildeten Aufnahmeschlitz vorsteht.

Um zu vermeiden, daß eine Person bei befugter Bedienung beim Öffnen des Eingangs des Weidezauns einen Stromschlag erhält, ist es vorteilhaft, daß das in der nicht leitenden Grundplatte und/oder Deckplatte ausgebildete Schlüsselloch derart bemessen ist, daß bei Eingriff des Schlüssels mit den elektrisch leitenden Teilen nur noch der isolierte Teil des Schlüssels von außen zugänglich ist.

Da derartige Weidezaunsysteme der Witterung ausgesetzt sind, ist es ferner bevorzugt, das Schlüsselloch an einer wettergeschützten Stelle, insbesondere an der Unterseite des Schlosses, anzuordnen.

Aus gleichen Gründen ist das Schloß bevorzugt abgedichtet ausgebildet, wobei das Schloß vollständig in Kunststoff eingegossen sein kann, sodaß lediglich das Schlüsselloch, der Aufnahmeschlitz und der Anschluß an das Weidezaunsystem freibleiben.

Im folgenden wird die Erfindung anhand von zwei in den Zeichnungen skizzenhaft veranschaulichten Ausführungsformen näher erläutert. Es zeigt:
Figur 1 eine schematische seitliche Schnittansicht einer ersten Ausführungsform der erfindungsgemäßen Vorrichtung und
Figur 2 eine Figur 1 entsprechende Ansicht einer abgewandelten Ausführungsform.

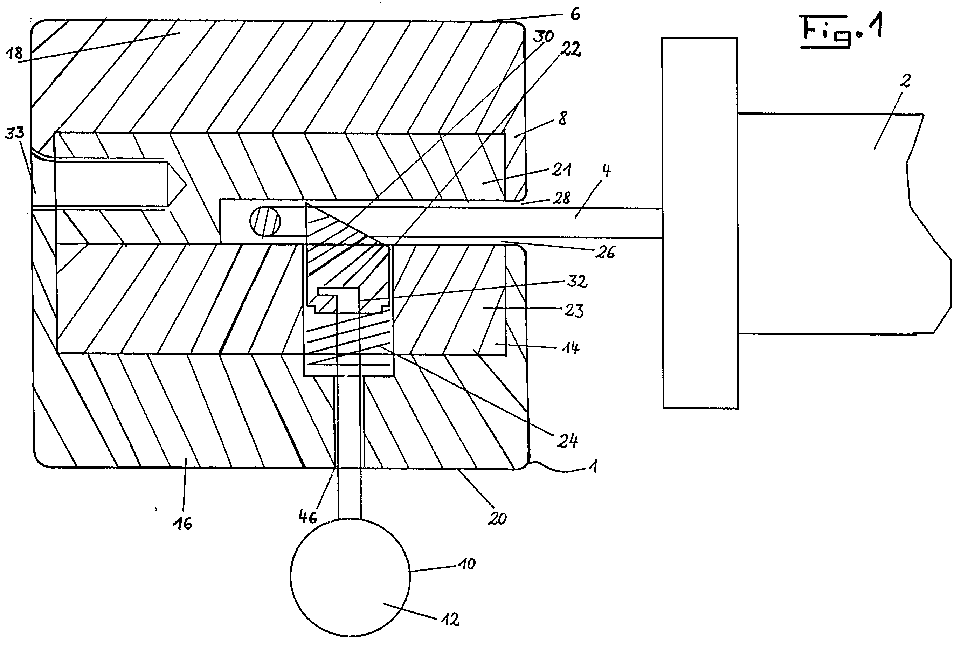

Die in Figur 1 veranschaulichte Ausführungsform der erfindungsgemaßen Vorrichtung 1 zeigt den prinzipiellen Aufbau, wobei zur Vereinfachung der Darstellung die zur Verbindung der Einzelteile notwendigen Bohrungen und Schrauben und die zur Befestigung der Vorrichtung erforderlichen Bohrungen in der zeichnerischen Darstellung weggelassen wurden.

Die erfindungsgemäße Vorrichtung 1 dient zum Verschließen der Eingänge in elektrischen Weidezaunsystemen, wobei ein handelsüblicher Torgriff 2 vorgesehen ist, welcher mit dem Weidezaunsystem üblicherweise über einen Draht oder eine Litze verbunden ist, und welcher mit einer elektrisch leitenden Lasche oder Bügel 4 mit einem elektrisch leitenden nicht dargestellten Gegenstück des Weidezaunsystems auf der anderen Seite des Eingangs lösbar koppelbar ist, wobei es sich üblicherweise bei dem Gegenstück um einen, an einem Isolator vorgesehenen Haken handelt.

Erfindungsgemäß ist das Gegenstück 6, wie in Figur 1 veranschaulicht, als mit dem Weidezaun elektrisch verbundenes Schloß 8 ausgebildet, welches den Bügel 4 des Torgriffs 2 aufnimmt und durch Unbefugte unlösbar verriegelt. Wie weiter unten noch näher erläutert wird, läßt sich das Schloß 8 lediglich mittels eines Schlüssels 10 öffnen, welcher, da er mit stromleitenden Teilen des Schlosses 8 in Eingriff gelangt, zumindest einen isolierten Griffteil 12 aufweist.

Das Schloß 8 gemäß der Ausführungsform nach Figur 1 ist als Schnappschloß 14 ausgebildet und besteht aus einer nicht leitenden Grundplatte 16 aus einem geeigneten Kunststoff, welche mittels geeigneter nicht dargestellter Bohrungen und Schrauben an dem Zaunpfahl eines Weidezauns befestigbar ist, sodaß das Schloß 8 gegenüber dem Pfahl isoliert ist.

Weiterhin weist das Schloß 8 eine nicht leitende Deckplatte 18 aus einem geeigneten Kunststoff auf, sodaß das Schloß 8 gegenüber der durch Personen zugänglichen Seite ebenfalls isoliert ist. Zwischen der Grundplatte 16 und der Deckplatte 18 ist ein Gehäuse 20, welches auch als Schloßkasten bezeichnet werden kann, angeordnet, in welchem ein Riegel 22 verschiebbar gelagert ist, welcher unter Vorspannung einer Feder 24 in einen Aufnahmeschlitz 26 für den Bügel 4 des Torgriffs 2 vorsteht. Das Gehäuse 20 besteht beim Ausführungsbeispiels gemäß Figur 1 aus zwei Zwischenplatten 21, 23 aus Messing, Edelstahl oder ähnlichem, welche mit dem elektrischen Weidezaunsystem verbunden sind.

Die das Schloß 8 bildenden Teile, d.h. die Grundplatte 16, die Deckplatte 18 und das Gehäuse 20 können an den Fugen entweder mit Silikon oder dgl. abgedichtet sein, oder es kann wie veranschaulicht, die Grundplatte 16 und die Deckplatte 18 derart ausgebildet sein, daß das Gehäuse 20 vollständig auf der Außenseite mit Kunststoff umschlossen ist.

Wie gezeigt, weist der Riegel 22 eine zur Eingangsseite 28 des Aufnahmeschlitzes 26 weisende Schrägfläche 30 auf, sodaß sich der Bügel 4 des Torgriffs 2 den Druck der Feder 24 überwindend in den Aufnahmeschlitz 26 einschieben läßt, wonach der Riegel 22 in die Lasche 4 des Torgriffs 2 einschnappt.

Um das Schloß 8 öffnen zu können, weist der Riegel 22 eine Schlüsselöffnung 32 in dem der Schrägfläche gegenüberliegenden Ende auf, mittels derer durch Eingriff des isolierten Schlüssels 10 in die Schlüsselöffnung 32 sich der Riegel 22 gegen den Druck der Feder 24 zurückziehen läßt und so den Torgriff 2 freigibt.

In Figur 1 ist mit 33 noch der Anschluß bezeichnet, mittels dessen das Schloß 8 an das elektrische Weidezaunsystem angeschlossen wird.

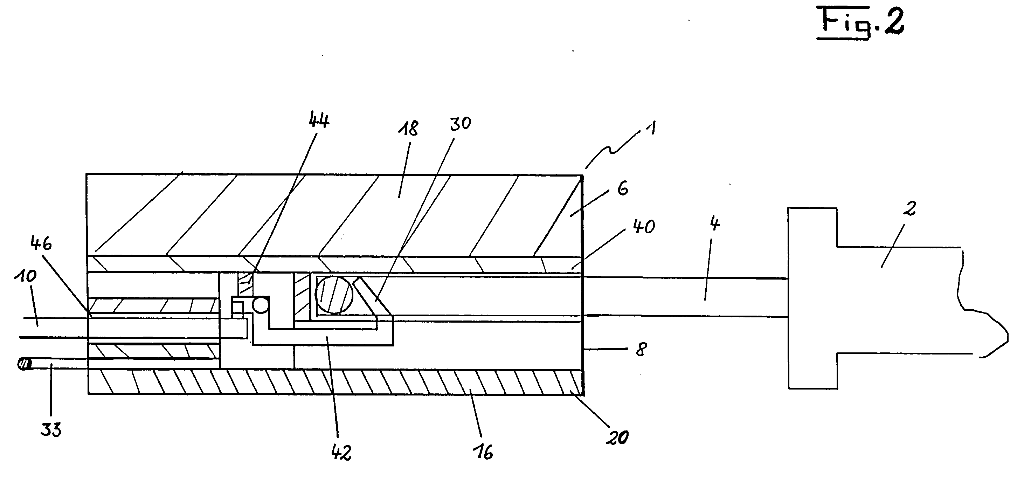

Bei der Ausführungsform gemäß Figur 2, welche ebenfalls stark schematisch veranschaulicht ist, ist das Schloß 8 mit einem Schloßkasten 40 versehen, in welchem ein Schwenkriegel 42 gelagert ist, der über den Anschluß 33 an das Weidezaunsystem angeschlossen ist und aufgrund der Tatsache, daß der Schloßkasten 40 aus Metall insbesondere aus Edelstahl besteht, ebenfalls stromführend ist.

Der Schwenkriegel 22 steht unter Vorspannung einer Feder 44 derart, daß der Schwenkriegel ebenfalls in dem in dem Schloßkasten ausgebildeten Aufnahmeschlitz vorsteht. Der Schwenkriegel 42 weist ebenfalls die Schrägfläche 30 auf, die es gestattet, daß das Schloß 8 gemäß der Ausführungsform nach Figur 2 als Schnappschloß arbeitet. Hinsichtlich der anderen Einzelheiten der Ausführungsform gemäß Figur 2, darf auf obenstehender Beschreibung der Ausführungsform gemäß Figur 1 verwiesen werden, da für gleiche bzw. für gleichwirkende Teile gleiche Bezugszeichen in der Darstellung gemäß Figur 2 verwendet wurden.

Bei beiden Ausführungsformen ist das in der Grundplatte 16 und/oder Deckplatte 18 ausgebildete Schlüsselloch 46 bevorzugt derart bemessen, daß bei Eingriff des Schlüssels 10 mit den elektrisch leitenden Teilen nur noch der isolierte Teil des Schlüssels von außen zugänglich ist. Alternativ läßt sich der gesamte Schlüssel 10 aus Kunststoff herstellen, wenn für die Haltbarkeit und Verschleißfestigkeit Sorge getragen ist. Das Schlüsselloch 46 ist bevorzugt an einer wettergeschützten Stelle, insbesondere an der Unterseite des Schlosses 8 angeordnet.

Bei praktischen Ausführungsformen in der Serienproduktion kann es vorteilhaft sein, den gesamten Schloßmechanismus in Kunststoff einzugießen, sodaß lediglich aus einem geschlossenen Gehäuse das Schlüsselloch, der Aufnahmeschlitz 26 und der Anschluß 33 herausführen.

Es wurden obenstehend zwei Ausführungsformen der erfindungsgemäßen Vorrichtung beschrieben, wobei dem Fachmann auf diesem Gebiet zahlreiche Änderungen und Abwandlungen offensichtlich sind, welche innerhalb des Grundgedankens der Erfindung liegen der darin gesehen wird, die Möglichkeit zu schaffen, ein unbefugtes Öffnen von Weidezauntoren in elektrischen Weidezaunsystemen durch ein geeignetes Schloß zu verhindern.

Sämtliche der aus der Beschreibung, den Ansprüchen und Zeichnungen hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

## Patentansprüche

1. Vorrichtung zum Verschließen der Eingänge in elektrischen Weidezäunen mit einem mit dem Weidezaun über einen Leiter verbundenen isolierten Torgriff, welcher mit einer elektrisch leitenden Lasche oder Bügel mit einem elektrisch leitenden Gegenstück des Weidezaunsystems lösbar koppelbar ist, **dadurch gekennzeichnet,** daß das Gegenstück (6) mit dem Weidezaun elektrisch verbundenes Schloß (8) ausgebildet ist, in welchem dar Bügel (4) des Torgriffs (2) verriegelbar ist und welches mittels eines, mindestens ein isoliertes Griffteil (12) aufweisenden Schlüssels (10) öffenbar ist.

2. Vorrichtung nach Anspruch 1, **dadurch gekennzeichnet,** daß das Schloß (8) als Schnappschloß (14) ausgebildet ist.

3. Vorrichtung nach Anspruch 1 oder 2, **dadurch gekennzeichnet,** daß das Schloß (8) zwischen einer nicht leitenden Grundplatte (16) und einer nicht leitenden Deckplatte (18) angeordnet ist, wobei das Schloß (8) mittels der Grundplatte (16) an einem Pfahl des Weidezaunes befestigbar ist.

4. Vorrichtung nach einem der vorstehenden Ansprüche, **dadurch gekennzeichnet,** daß das Schloß (8) einen in einem elektrisch leitenden Gehäuse (20) gelagerten stromführenden Riegel (22) aufweist, welcher unter Vorspannung einer Feder (24) in einen Aufnahmeschlitz (26) für den Bügel (4) des Torgriffs (2) vorsteht.

5. Vorrichtung nach Anspruch 4, **dadurch gekennzeichnet,** daß der Riegel (22) eine zur Eingangsseite (28) des Aufnahmeschlitzes (26) weisende Schrägfläche (30) aufweist, und daß der Riegel (22) eine Schlüsselöffnung (32) in dem der Schrägfläche (30) gegenüberliegenden Ende aufweist, mittels derer der Riegel (22) mit dem isolierten Schlüssel (10) aus dem Aufnahmeschlitz (26) zurückziehbar ist.

6. Vorrichtung nach einem der vorstehenden Ansprüche, **dadurch gekennzeichnet**, daß zwischen der Grundplatte (16) und der Deckplatte (18) ein aus Metall, insbesondere Edelstahl bestehender Schloßkasten (40) angeordnet ist, und daß der Schloßkasten (40) einen mit dem isolierten Schlüssel (10) auslenkbaren Schwenkriegel (42) enthält, welcher unter Federvorspannung in den in dem Schloßkasten (40) ausgebildeten Aufnahmeschlitz (26) vorsteht.

7. Vorrichtung nach einem der vorstehenden Ansprüche, **dadurch gekennzeichnet,** daß das in der nicht leitenden Grundplatte (16) und/oder Deckplatte (18) ausgebildete Schlüsselloch (46) derart bemessen ist, daß bei Eingriff des Schlüssels (10) mit den elektrisch leitenden Teilen, nur noch der isolierte Teil des Schlüssels (10) von außen zugänglich ist.

8. Vorrichtung nach einem der vorstehenden Ansprüche, **dadurch gekennzeichnet,** daß das Schlüsselloch (46) an einer wettergeschützten Stelle des Schlosses (8), insbesondere an dessen Unterseite angeordnet ist.

9. Vorrichtung nach einem der vorstehenden Ansprüche, **dadurch gekennzeichnet,** daß das Schloß (8) abgedichtet ausgebildet ist.

10. Vorrichtung nach Anspruch 9, **dadurch gekennzeichnet,** daß das Schnappschloß (14), bzw. der Schloßkasten (40) in ein Kunststoffgehäuse eingegossen sind, welches lediglich den Aufnahmeschlitz (26), den Anschluß (33) an das Weidezaunsystem und das Schlüsselloch (46) offenläßt.
